(19) Europäisches Patentamt
European Patent Office
Office européen des brevets

(11) **EP 4 414 860 A1**

(12) **EUROPEAN PATENT APPLICATION**

(43) Date of publication:
**14.08.2024 Bulletin 2024/33**

(51) International Patent Classification (IPC):
**G06F 16/29** $^{(2019.01)}$   **G06F 16/215** $^{(2019.01)}$

(21) Application number: **23155851.1**

(52) Cooperative Patent Classification (CPC):
**G06F 16/29; G06F 16/215**

(22) Date of filing: **09.02.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Zurich Insurance Company Ltd.
Fareham, Whiteley PO15 7JZ (GB)**

(72) Inventors:
- **Davis, Jonathan
  Fareham PO15 6DG (GB)**
- **Brocklesby, Isaac
  London N19 4NB (GB)**

(74) Representative: **Hepp Wenger Ryffel AG
Friedtalweg 5
9500 Wil (CH)**

(54) **SYSTEMS AND METHODS FOR MATCHING RAW ADDRESS DATA TO AN IDENTIFIER**

(57) The invention pertains to a computer-implemented method for address matching with a high accuracy and query speed as well as excellent scalability. A first step of the method comprises preprocessing address data with an identifier from at least one database by determining and assigning a rarity score to every token of the address data entries, wherein the rarity score is determined using a TF-IDF algorithm. In a further step of the method, a similarity assessment is performed between the rarity-scored tokenized address data and tokenized raw address data from a user query. The similarity assessment is performed using at least two selection methods to determine the best possible matching address data entries and the corresponding identifiers for the raw address data entries from the user query. The invention further pertains a data processing system, a computer program and a computer-readable medium to carry out the method.

FIGURE 1

Processed by Luminess, 75001 PARIS (FR)

**Description**

The present invention relates to systems and methods for matching raw address data to an identifier.

Correct address data are the basis for reliable and fast processing of requests for shipping and delivery of physical goods and mail. Similarly, emergency services benefit from having an accurate location of an emergency (in many cases this is an address) to quickly help the person(s) in need. An address entered into a system by a user (for example, in an address field on a delivery service's website) or an address given by a person in distress on the telephone and entered into a system by an emergency operator as unstructured text have undefined spelling and format depending on the user or person in distress. For these purposes, it is fundamental that the raw address data can be assigned to a specific address known to the system in which they are entered.

Address matching (or geocoding) is a process used to verify, standardise and correct address data. It is used to assign raw address data to addresses in (a) database(s) that often include a unique identifier for each address data entry making sure that all involved persons and systems refer to the same place. Apart from the raw address data having an undefined spelling and format, different address databases have different data formats. This makes address matching a complicated task. However, a reliable and fast address matching system would be useful in many public and private institutions in addition to those mentioned above (delivery and emergency services). These institutions comprise governmental administrations, healthcare institutions, insurance services and criminal investigation departments. Since there is such a fundamental need for precise address matching, different solutions based on computer-implemented methods have been proposed in the past.

Various approaches have been proposed in the prior art.

One approach to address matching is fuzzy logic which looks for similarities between words (e.g. BELL, G.B. & SETHI, A. Matching records in a national medical patient index. Commun. ACM 2001, Vol. 44, No. 9, pages 83 to 88.). In contrast to binary logic, fuzzy logic takes a range of conditions and assigns each one a degree of truth or falsity. It then calculates a result based on these degrees of truth or falsity which can be represented as a range of values (from 0 to 1) instead of a single, exact value. In the case of address matching, fuzzy logic would choose the pair of addresses with the lowest string distance between each other. However, fuzzy logic can often lead to incorrect matches. For example, although "Oxford Street Manchester" and "Manchester Street Oxford" are very different places, fuzzy logic would rate them as matching. As another example, although it seems clear that "27 Old Road Hull" and "The Brand-new Toy Emporium 27 Old Road Hull" refer to the same place, fuzzy logic would not recognise this (with the Jaccard method and q=2, the string distance is 0.659, which is very high). In addition, fuzzy logic is very slow. There are ways to overcome this but many of them sacrifice accuracy.

Another approach to address matching which is strong, in theory, is formatting the data into "address line 1, address line 2, ..., town, county" (e.g. KOUMARELA, I. et al. Experience: Enhancing Address Matching with Geocoding and Similarity Measure Selection. ACM J. Data Inf. Qual. 2018, Vol. 10, No. 2, pages 5 to 9.). Splitting the addresses in this manner, however, is memory intensive and slow, and due to the non-uniformity of addresses verifying that addresses have been split in the right way would be challenging without complicated machine learning and deep word analysis.

"Term frequency-inverse document frequency" (TF-IDF) is a numerical statistic used to measure how important a word is to a document in a collection of documents. It is often used as a weighting factor in searches of information retrieval, text mining, and user modelling. The TF-IDF value increases proportionally to the number of times a word appears in the document, but is offset by the frequency of the word in the corpus, which helps to adjust for the fact that some words appear more frequently in general.

TF-IDF has been applied in different steps of computer-implemented methods for address matching, mostly for the matching the raw address data to the database's address data directly (e.g. MANGALGI, S. et al. Deep Contextual Embeddings for Address Classification in E-commerce. AI For Fashion Supply Chain. arXiv:2007.03020v1 2020, pages 9 to 10; WO 2012125950 A1 (MAS-TERCARD INTERNATIONAL INC.) 20 September 2012, paragraph [0003]). These methods are frequently based on fuzzy logic using TF-IDF, which has the same disadvantages mentioned above. Additionally, the TF-IDF algorithm must be repeated again for each user query to compare the raw address data with the address data from the databases. This requires a high level of computer resources and significantly increases the duration of requests.

Other computer-implemented methods using TF-IDF as part of an address matching process use a trained machine learning model requiring a large set of training data (e.g. SHAN, S. et al. Geographical address representation learning for address matching.

World Wide Web. 2020, Vol. 23, pages 2005 to 2022). The training phase of a machine learning process can be quite time consuming, and it may lack the flexibility to be adapted to better fit changing address data and be employed in new regions or countries in which the model is not trained in. This degree of flexibility would be favourable, however, for an address matching system.

It is thus an object of the present invention to overcome the aforementioned downsides of prior art methods.

In particular, it is an object of the present invention to provide an improved method for matching raw address data to an identifier of an address entry in (a) database(s) that is clearly assignable to a place, wherein the accuracy of the outputs is better than with existing methods, and wherein the outputs are delivered at least as fast. A better accuracy could thereby for example be indicated by a lower number of possible matches, wherein the correct match(es) is/are included.

Towards this end, a first aspect of the invention pertains to a computer-implemented method for use in mail and parcel delivery, wherein the method matches raw address data to an identifier using a computer device coupled to at least one database. The method comprises several steps.

Step A is a pre-processing step for address data from the at least one database. More specifically, the pre-processing step A includes:

i) a sub-step of receiving at least one input dataset from the at least one database comprising address data entries with corresponding identifiers;
ii) a sub-step of tokenizing the address data from the at least one input dataset;
iii) a sub-step of determining and assigning a rarity score to every token, wherein the rarity score is determined using a TF-IDF algorithm; and
iv) a sub-step of producing a first output dataset comprising rarity-scored tokens for each address data entry in the at least one input dataset.

Further, step B is a pre-processing step for raw address data. More specifically, the pre-processing step B includes:

i) a sub-step of receiving at least one raw address data entry through a user query;
ii) a sub-step of tokenizing the raw address data; and
iii) a sub-step of producing a second output dataset comprising tokenized raw address data for each entry in the user query.

Yet further, in step C, a similarity assessment is performed of the rarity-scored tokenized address data entries from the first output dataset with each tokenized raw address data entry from the second output dataset with at least two selection methods that are ranked in order of priority.

Yet further, in step D, a third output dataset is produced comprising at least one identifier from the corresponding address data entry from the first output dataset for each raw address data entry from the second output dataset determined in the similarity assessment.

The designation of steps A, B, C and D is not meant to imply that the steps must always be carried out in exactly this alphabetical order. It is true, for example, that step A is usually executed before step B. However, it is also possible, especially with these two steps, that step B is carried out before step A.

In the context of the present invention, raw address data is data that has not been processed for use and that has the potential to become information. A raw address data entry may for example be a set of unstructured information related to an address, such as house numbers, street names, postcodes, city names, etc. The term "unstructured" indicates that the individual pieces of information may occur in any order, that individual pieces of information may be abbreviated, that information may be missing, and that the data may be erroneous, for example due to spelling mistakes.

According to the invention, an identifier is understood to be a string that is assigned to a specific address. Each address has its own unique identifier. Data entries from different datasets in different databases that belong to the same location have the same identifier.

A database is a structured set of data held in a computer that is accessible in various ways. The address data comprised in the database(s) according to the invention may be structured in a way the skilled person considers appropriate. The method according to the invention could be executed with any address database in principle. Specific examples of such databases will be given below.

The computer device is coupled to the at least one database in such a way that data communication is possible in both directions at any required time. The connection may be a wired or wireless; or a combination of several connection types. Types of suitable wired connections comprise twisted pair wiring, coaxial wiring, ethernet wiring and fibre optic wiring as known to the skilled person. Types of suitable wireless connections comprise Wireless Personal Area Networks (WPAN; e.g. Bluetooth), Wireless Local Area Networks (WLAN), Wireless Wide Area Networks (WWAN; e.g. used for mobile phone signals) and Wireless Metropolitan Area Networks (WMAN) as known to the skilled person. Further, the database may be located at a data centre and accessed to via a Personal Area Network (PAN), a Local Area Network (LAN), a Metropolitan Area Network (MAN), a Global Area Network (GAN) or any other type of suitable computer network.

In the context of the invention, the input dataset(s) from the at least one database may consist of address data entries that have a format standardised to each input dataset and that comprise information to a particular address, such as house numbers, street names, postcodes, city names etc. A standardised format means that the information to a particular address in a dataset appears in the same order, has the same abbreviations or no abbreviations, and that the data is substantially free of errors. Additionally, each address data entry is assigned to an identifier. The collection of address data entries from all databases used substantially all addresses in a certain geographic or administrative division. Such a division may comprise one or more single villages, city districts, cities, counties, regions, countries or continents; or it may be a global address data input dataset.

As it is known in the art, a token is an instance of a sequence of characters in some particular document that are grouped together as a useful semantic unit for processing. Tokenization is the task of splitting up a character sequence into tokens. Tokenization is done for both the address data entries from the input dataset(s) and the raw address data entries.

A rarity score for each token is determined using a TF-IDF algorithm. The rarity score indicates the importance of a token based on its frequency within a document (i.e. an address data entry) as well as its rarity across all documents in a corpus (i.e. all address data entries within a postcode). The higher the maximum TF-IDF value for a token among all documents in a corpus, the higher is its rarity score within this corpus. A higher rarity score indicates a higher importance of a token.

The first output dataset consists of the address data entries from the input dataset(s), with each address data entry tokenized and each token assigned a rarity score.

In a user query, raw address data entries may be added via one or multiple text fields in a user form, by uploading a file pertaining one or more raw address data entries (e.g. in .csv, .txt or .pdf file format) or in any other way the skilled person deems appropriate.

The second output dataset consists of the one or more raw address data entries received from the user query, with each raw address data entry tokenized.

In a method according to the invention, at least one address data entry from the first output dataset is assigned to each address data entry from the second output dataset for each selection method of the similarity assessment.

The third output dataset consists of at least one raw address data entry from the second output dataset. At least one address data entry from the first output dataset with its corresponding identifier is assigned to each raw address data entry as determined in the similarity assessment. The raw address data have thus become information.

The method described works by breaking down the addresses in some given input data into their most distinguishing elements, then using these along with a common characteristic (which may be the postcode) to match to the address data in the databases. The method solves a number of problems that other methods for address matching with or without a TF-IDF algorithm cannot solve.

Firstly, current methods that look for similarities between words (for instance methods based on fuzzy logic) often lead to incorrect matches. As discussed previously, these methods tend to match address entries that do not refer to the same place, or they do not match address entries if they have a very different format even though they refer to the same place. The similarity assessment of the present method does not simply compare each word, as is often done in state-of-the-art methods. Instead, the tokens with the highest importance as key components of the address are determined first. This leads to a much higher accuracy of the results. The list of possible matches for the raw address data entered by the user is smaller and the probability that the correct address is in this smaller list is higher. In the best case, only one address (which is the correct address) is returned to the user.

Secondly, most methods also lack stable scalability. This means that they become very slow to the point of unusability at higher data volumes. This is a very unattractive feature for address matching, as large amounts of address data are needed to obtain meaningful matches. Speed problems with higher data volumes occur, for example, with methods such as fuzzy logic. The same problem is encountered with methods that try to decompose the address data into the individual address components (e.g. address line 1, address line 2, city, district, ...). The present method handles the processor-intensive steps already during the pre-processing step of the address data from the database(s). And since the pre-processing does not have to be done for every user query but very rarely or even only once, the steps that have to be repeated frequently are less resource-intensive. For this reason, queries can be processed faster with the present method compared to methods known in the prior art, even with large amounts of data.

Thirdly, current methods that employ TF-IDF in other ways than the present invention does are often based on fuzzy logic as described above. It is therefore obvious that these methods encounter the same problems of accuracy, use of computer resources and scalability as other methods based on fuzzy logic. Additionally, TF-IDF-based methods often rely on a trained machine learning model. This requires a large set of training data, and the training phase of a machine learning process can be quite time-consuming. The present method does not use a trained machine learning model and such a training phase is thus not required. The pre-processing of the address data entries from the databases requires less resources than training of a machine learning model. This gives the present invention a higher degree of flexibility to easily apply it to different regions and countries that have different types of address formats.

In a preferred embodiment, the address data entries in the database(s) and the raw address data entries are received as a string or a set of strings.

In another preferred embodiment, the identifier is a unique numerical or unique alphanumerical identifier, as it will be outlined further in a more specific example below.

In a preferred embodiment, each token from the address data entries from the database(s) and the raw address data entries is a word token or a number token.

In a preferred embodiment, a token represents a term, an address data entry represents a document and all address data entries that have the same postcode represent a corpus in the TF-IDF algorithm. The TF-IDF algorithm for determining the rarity score of each term within a corpus comprises the following steps:

A) determining the term frequency for every term in each document, wherein the term frequency is equal to 0 if the term does not exist in the document, and the term frequency is equal to 1 if the term does exist in the document;

B) determining the inverse document frequency by calculating the decadic logarithm of the fraction between the number of the documents in the corpus and the number of documents in the corpus that contain the term;

C) multiplying the term frequency with the inverse document frequency to generate the TF-IDF value for each term in each document; and

D) determining and selecting the maximum TF-IDF value for each term from all documents to generate the rarity score for each term.

Hence, the TF-IDF value of a particular term (i.e. a word token or a number token) in a particular document (i.e. an address data entry) is determined by

$$TF\text{-}IDF = TF \times IDF, \tag{1}$$

where TF is the term frequency and IDF is the inverse document frequency. The binary definition of TF is used. If the term (i.e. the word token or number token) does not exist in the document (i.e. the address), TF is equal to zero. If the term exists in the document, TF is equal to 1. IDF is determined by

$$IDF = \log\left(\frac{N_{docs,tot}}{N_{docs,term,x}}\right), \tag{2}$$

where $N_{docs,tot}$ is the number of documents (i.e. addresses) in the corpus (i.e. all addresses within a postcode) and $N_{clocs,term,x}$ is the number of documents in the corpus that contain the term. Inserting Equation 2 in Equation 1 yields

$$TF\text{-}IDF = TF \times \log\left(\frac{N_{docs,tot}}{N_{docs,term,x}}\right). \tag{3}$$

After determining a TF-IDF value for each term in each document, the maximum TF-IDF value for each term is determined and selected to generate the rarity score of that term within a corpus. Notably, a term does not necessarily have to have the same rarity score in two different corpora (i.e. postcodes).

If the term frequency of a term in a document is 0, the TF-IDF value is set to 0 for that term in that document. Otherwise, the TF-IDF value would be undefined, as the denominator would be 0 when calculating the IDF value.

The pre-processing step A of the address data from the at least one database may be, and preferably is executed only once and the resulting first output dataset is stored and used for the similarity assessment each time a new user query is executed. Since the tokenization and the determination and assigning of the rarity score in the pre-processing step A are some of the most resource-intensive steps of the method with regards to time consumption and computational resources, it is highly advantageous to execute pre-processing step A only when the method is executed for the first time and whenever data entries are changed or added. For example, if the TF-IDF algorithm in the pre-processing step A would have to be applied each time a new raw address data entry in a user request is added, the method would be significantly slower.

When new data entries are added or existing data entries are changed, pre-processing step A may be re-executed either when one or a predefined number of entries have been added or changed; after a predefined time period; or by manually triggering the execution of pre-processing step A.

In a preferred embodiment, the similarity assessment includes:

A) a sub-step of receiving the first output dataset and the second output dataset;

B) a sub-step of identifying and selecting rarity-scored tokenized address data entries from the first output dataset that have a common characteristic with the tokenized raw address data from the second output dataset;

C) a sub-step of identifying and selecting at least one data entry obtained in the previous step in at least two selection methods. The selection methods are ranked in order of priority. Each selection method comprises:

> i) a sub-step of defining a unique (set of) condition(s) for the respective selection method;
> ii) a sub-step of identifying and returning at least one data entry that contains (a) token(s) fulfilling the condition(s) of the respective selection method;

D) a sub-step of identifying the selection method(s) that return the smallest number of data entries;
E) if more than one selection methods return the smallest number of data entries, a sub-step of identifying the one selection method identified in the previous step with the highest priority assigned;
F) a sub-step of returning the data entry/entries obtained in either the two previous steps and their corresponding identifier.

The term "unique (set of) condition(s)" indicates that each selection method has its own (set of) condition(s) that differ(s) from the (set of) condition(s) of all other selection methods.

In another preferred embodiment, the common characteristic is the postcode.

In yet another preferred embodiment, for defining the (set of) condition(s) for each selection method, the rarity-scored tokenized data entries from the first output dataset and the tokenized raw address data from the second output dataset have (an) identical token(s) fulfilling one of the following conditions or any combination thereof:

A) a number token;
B) the word token with the highest rarity score;
C) the word token with the second highest rarity score;
D) the number token with the highest rarity score;
E) the number token with the second highest rarity score;
F) the first token in the address;
G) the second token in the address;
H) a word token consisting of a single letter; and/or
I) the last number and the first word after.

For many addresses, the most important factor will be the number tokens they contain, as they are more reliably correct compared to word tokens. So, the selection method with the highest priority may check if the numbers are the same. In many cases, addresses with the same number are a successful match.

However, not all addresses have numbers in them, so the selection method with the second highest priority may look at words. Unlike numbers, words are very fickle and subject to variation, so the challenge comes in how to decide which words are relevant for a successful match. The simplest and quickest way to accomplish this is to find the rarest words for an address within, for example, a postcode, district, village or town.

Failing these steps, other factors which also can be used are the first words and single letters in the addresses, as these can frequently lead to successful matches. There is also the option of combining the previous steps in various ways, so looking for common words and numbers together.

A final factor which is arguably one of the most important is the last number and the subsequent word after that number. The reason this is so impactful is because a significant proportion of commercial addresses have situationally unhelpful information in them. A (fictional) example for the United Kingdom (UK) of this would be 'Mr Smith Room 6 Floor 8 Zurich PLC 70 Mark Lane London EC3R 7NQ'. At a property level, much of the initial information is detrimental to the match. The unnecessary words could distort the rarest words and the numbers now contain additional information so a one-to-one match using numbers is unlikely. Using last number and the subsequent word after that number gives us '70 Mark', which removes the unhelpful initial information and provides a higher chance of a match.

In a preferred embodiment, the conditions and/or the ranking of the at least two selection methods are predefined.

In another preferred embodiment, the conditions and/or the ranking of the at least two selection methods are defined by user input.

Another aspect of the invention relates to a data processing system comprising means for carrying out the methods as outlined above.

Yet another aspect of the invention relates to a computer program comprising instructions which, when the program is executed by a computer, cause the computer to carry out the methods as outlined above.

A further aspect of the invention relates to a computer-readable medium comprising instructions which, when executed by a computer, cause the computer to carry out the methods as outlined above.

The invention will now be described by way of more specific embodiments. These embodiments are not intended to limit the gist of the invention in any way, but rather serve to ease understanding of the invention.

Fig. 1:    simplified flow diagram of the method's principal steps;

Fig. 2:    simplified flow diagram of step A (100);

Fig. 3:    simplified flow diagram of step B (200);

Fig. 4:    simplified flow diagram of step C (300) for one raw address data entry ($A_{raw}$);

Fig. 5:    exemplary address matching process for an input dataset (ID) and a user query (Q).

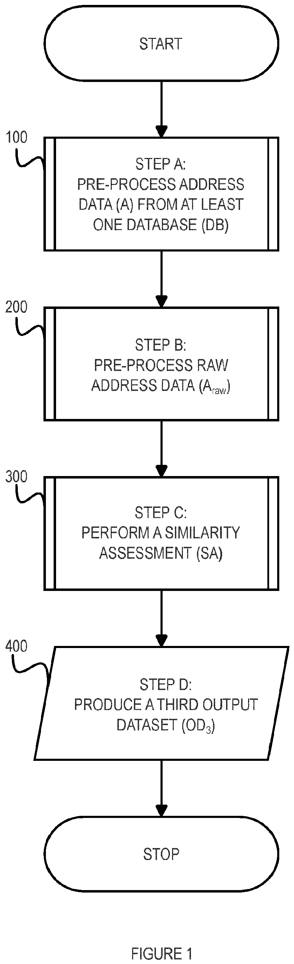

As outlined in the simplified flow diagram of Figure 1, the method consists of three principal steps (steps A (100), B (200) and C (300)), each of which is a separate subroutine, and a step D (400) that produces a third (and final) output dataset ($OD_3$) for the user as a result from the overall process. Step A (100) comprises the pre-processing of address data (A) from at least one database (DB). Step B (200) comprises the pre-processing of at least one raw address data entry ($A_{raw}$). In step C (300), a similarity assessment (SA) is performed with the pre-processed data from steps A (100) and B (200).

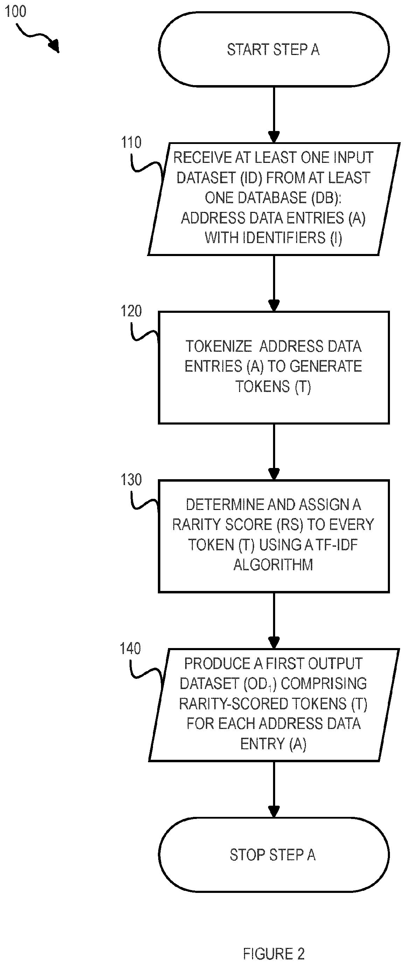

Figure 2 shows a simplified flow diagram of step A (100), the pre-processing of address data (A) from at least one database (DB). At least one input dataset (ID) comprising address data entries (A) with corresponding identifiers (I) from at least one database (DB) is received in sub-step (110). The address data entries (A) are tokenized in sub-step (120) to generate tokens (T). A rarity score (RS) is determined and assigned in sub-step (130) to every token (T) using a TF-IDF algorithm. Finally, a first output dataset ($OD_1$) is produced in sub-step (140) comprising rarity-scored tokens (T) for each address data entry (A).

In the case of the UK, the Unique Property Reference Number (UPRN), a standard ID used throughout the UK, is suitable as an identifier for example.

Examples for address databases (DB) for the UK are:

- Delivery Point Address (DPA) - A record of all addresses which receive mail in England, Scotland, and Wales;
- Basic Land Property Unit (BLPU) - A basic record of many objects of interest within England, Scotland, and Wales;
- Local Property Identifier (LPI) - Enrichment for BLPU;
- Classification - A record of what each entry in BLPU is;
- Pointer - Essentially DPA but for Northern Ireland, provided by ESRI.

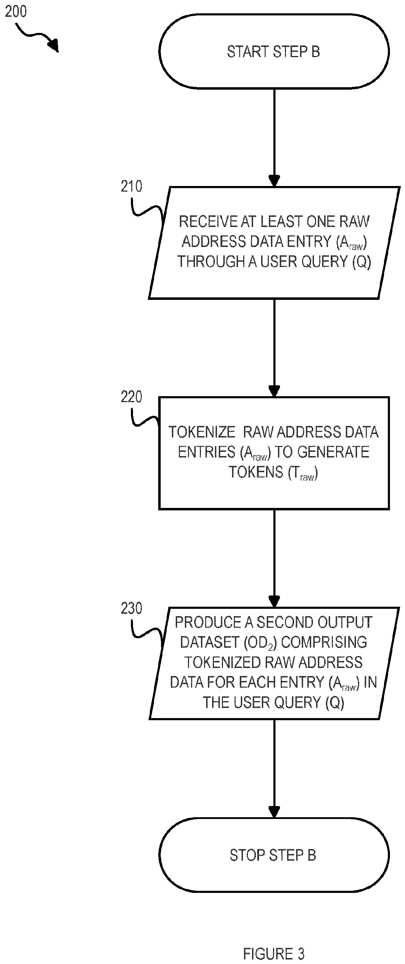

Figure 3 shows a simplified flow diagram of step B (200), the pre-processing of raw address data entries ($A_{raw}$). At least one raw address data entry ($A_{raw}$) is received in sub-step (210) through a user query (Q). The raw address data entries ($A_{raw}$) are tokenized in sub-step (220) to generate tokens ($T_{raw}$). Finally, a second output dataset ($OD_2$) is produced in sub-step (230) comprising tokenized raw address data for each entry ($A_{raw}$) in the user query (Q).

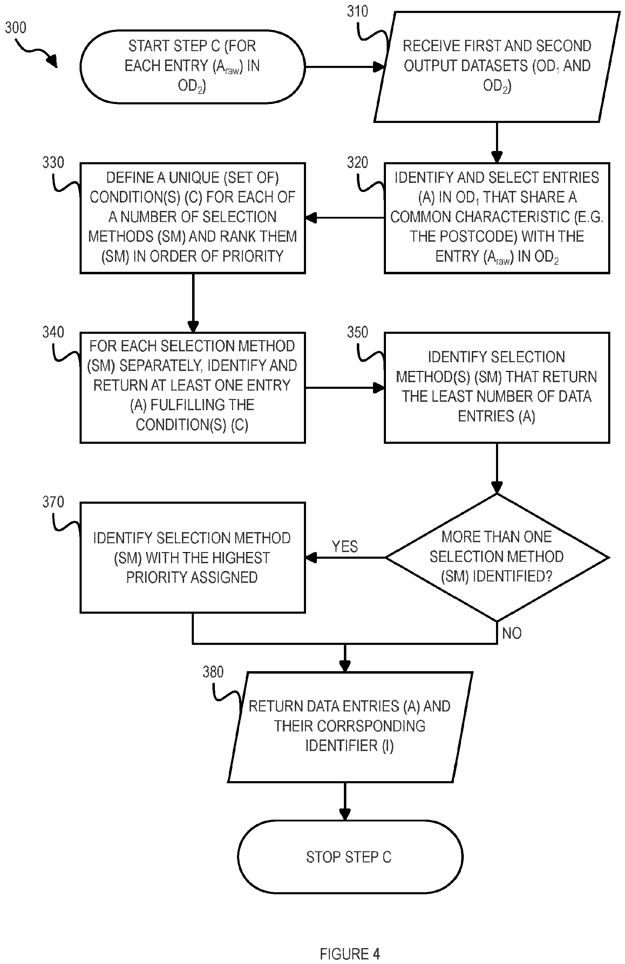

Figure 4 shows a simplified flow diagram of step C (300), the similarity assessment (SA), for a single raw address data entry ($A_{raw}$). Step C (300) is repeated for each raw address data entry ($A_{raw}$) in the output dataset ($OD_2$). The first and second output datasets ($OD_1$ and $OD_2$) are received in sub-step (310) first. Address data entries (A) in $OD_1$ that share a common characteristic with the raw address data entry ($A_{raw}$) in $OD_2$ are identified and selected in sub-step (320). The common characteristic may for instance be the postcode. For each of a number of selection methods (SM), a unique (set of) condition(s) (C) is defined in sub-step (330). The selection methods (SM) are ranked in order of priority. For each selection method (SM) separately, at least one address data entry (A) is identified and returned that fulfils the condition(s) (C) in sub-step (340). The selection method(s) that return the least number of address data entries (A) is/are identified in sub-step (350). If more than one selection method (SM) is identified, the one selection method (SM) with the highest priority assigned is identified in sub-step (370). Finally, the identified address data entries (A) and their corresponding identifier (I) are returned in sub-step (380).

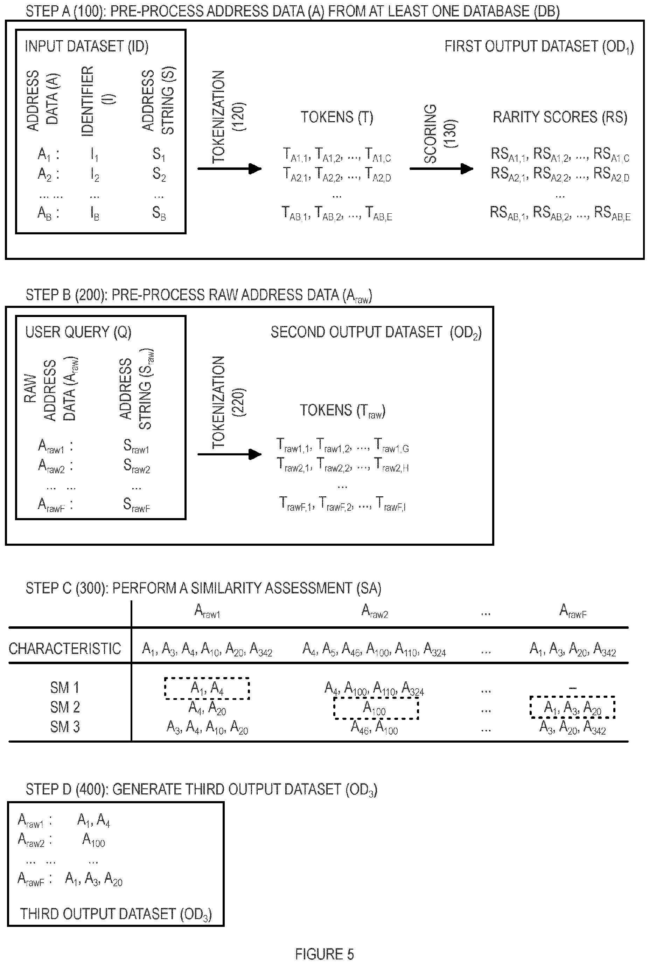

Figure 5 shows an exemplary address matching process for an input dataset (ID) and a user query (Q). In pre-processing step A (100), the input dataset (ID) comprises a number of address data ($A_1$, $A_2$, ..., $A_B$) that each are composed of an identifier ($I_1$, $I_2$, ..., $I_B$) and an address string ($S_1$, $S_2$, ..., $S_B$). Each address string (S) is tokenized in sub-step (120) into a series of tokens ($[T_{A1,1}, T_{A1,2}, ..., T_{A1,C}]$; $[I_{A2,1}, T_{A2,2}, ..., T_{A2,D}]$; [...]; $[T_{AB,1}, T_{AB,2}, ..., T_{AB,E}]$), wherein the number of tokens may vary for each address string. A rarity score is assigned in sub-step (130) to each token ($[RS_{A1,1}, RS_{A1,2}, ..., RS_{A1,C}]$; $[RS_{A2,1}, RS_{A2,2}, ..., RS_{A2,D}]$; [...]; $[RS_{AB,1}, RS_{AB,2}, ..., RS_{AB,E}]$) using a TF-IDF algorithm. A first output dataset ($OD_1$) is produced comprising I, S, T and RS of each address data entry A.

In pre-processing step B (200) of Figure 5, a number of raw address data ($A_{raw1}$, $A_{raw2}$, ..., $A_{rawF}$) is entered in a user query (Q) that each are composed of an address string ($S_{raw1}$, $S_{raw2}$, ..., $S_{rawF}$). Each address string ($S_{raw}$) is tokenized in sub-step (220) into a series of tokens ($[T_{raw1,1}, T_{raw1,2}, ..., T_{rawF,G}]$; $[T_{raw2,1}, T_{raw2,2}, ..., T_{raw2,H}]$; [...]; $[T_{rawF,1}, T_{rawF,2}, ..., T_{rawF,I}]$). A second output dataset ($OD_2$) is produced comprising $S_{raw}$ and $T_{raw}$ of each raw address data entry $A_{raw}$.

In step C (300) of Figure 5, the result of an exemplary similarity assessment (SA) is shown. In the first step, address data entries (A) are selected that share a common characteristic with the respective raw address data entry ($A_{raw}$). For example, the data entries have the same postcode. In this example, there are six, six and four address data entries (A) identified for raw address data entries $A_{raw1}$, $A_{raw2}$ and $A_{rawF}$, respectively.

Although there are three selection methods (SM) in this example, there may be any number of selection methods (SM) larger than one in other cases. The selection methods in this example have the following conditions:

- selection method (SM) 1: address data entries (A) are selected that share a number token (T) with the raw address data entry ($A_{raw}$);
- selection method (SM) 2: address data entries (A) are selected that share the word tokens (T) with the highest and second highest rarity score (RS) with the raw address data entry ($A_{raw}$);
- selection method (SM) 3: address data entries (A) are selected that share the word token (T) with the highest rarity score (RS) and the number token (T) with the highest rarity score (RS) with the raw address data entry ($A_{raw}$).

For $A_{raw1}$, selection methods (SM) 1 and 2 both return two address data entries (A). Selection method (SM) 1 has a higher priority assigned than selection method (SM) 2. Therefore, $A_1$ and $A_4$ are selected as results of the similarity assessment for $A_{raw1}$.

For $A_{raw2}$, selection method (SM) 2 returns only one address data entry (A). Therefore, $A_{100}$ is selected as result of the similarity assessment for $A_{raw2}$.

Similarly, $A_2$, $A_3$ and $A_{20}$ are selected as results of the similarity assessment (SA) for $A_{rawF}$ in this example.

The similarity assessment (SA) is repeated for each raw address data entry $A_{raw1}$ to $A_{rawF}$ and the address data (A) surrounded by the dotted boxes in Figure 5 are returned. This set of data is comprised in the third output dataset ($OD_3$), which is returned to the user as a result of the user query (Q).

Comparative Examples

The examples below show the raw address data entry ($A_{raw}$) used in a user query (Q) of the present invention and "GBG Addressy" (currently known as "Loqate"), a commercial tool used in the UK. There are many cases where the present method and "GBG Addressy" disagree due to their different address matching approaches. "GBG Addressy" takes a fuzzy logic approach, often leading to more incorrect matches along with sometimes the correct match, with no way to tell which is correct without manual review.

Case 1 - input is "Finglands Coachways Ltd, 261 Wilmslow Road M14 5LJ"

The present invention provides 3 matches:

1. GROUND FLOOR 261 , M14 5LJ
2. GROUND FLOOR AND FLIRST FLOOR 261 , M14 5LJ
3. 261 , M14 5LJ

"GBG Addressy" provides 8 matches:

1. 261 Wilmslow Road Manchester M14 5LJ
2. 14 Fingland Road Liverpool L15 0ES
3. Sew in 43 Wilmslow Road Cheadle SK8 1DR
4. La Hore 83 Wilmslow Road Manchester M14 5AL
5. La Academia 13A Wilmslow Road Cheadle SK8 1DW
6. La Cantina 653B Wilmslow Road Manchester M20 6QZ
7. Land South of Coach Road Lady Park Birtley NE11 0HD
8. Land South of Coach Road Leeds LS20 8EW

In this case, the present invention provides 3 matches all relating to the same correct property. "GBG Addressy" provides the correct match (number 1) but then 7 incorrect matches. Match 2 from "GBG Addressy" has picked up on the word "Fingland" but has found this in the street name of another address, which is not relevant. The remaining matches are then mostly other "Wilmslow Road" addresses.

Case 2 - input is "British Bakeries Ltd Belmont Road Erith DA8 1JZ"

The present invention provides 1 match:
BRITISH BAKERIES LTD BELMONT ROAD ERITH, DA8 1JZ

"GBG Addressy" provides 9 matches:

1. British Bakeries Ltd 16 Chaucer Road Forest Gate, E7 9NB
2. British Bakeries Ltd Chaucer Road Forest Gate, E7 9
3. British Bakeries Ltd Norwich Road, IP14 5ND
4. British Bakeries Ltd Burrington Road, PL5 3LX
5. British Bakeries Ltd Toynbee Road , SO50 9DH
6. Staff Canteen British Bakeries Ltd Chaucer Road, E7 9LZ
7. British Bakeries Ltd Wheatfield Road Westerhope, NE5 5LB
8. 16 Chaucer Road, E7 9
9. Main Road Watll, NG16 1HB

Here, the present invention has found the correct match, but "GBG Addressy" has found many other branches of "British bakeries" across the UK.

Case 3 - input is "Pizza Direct, 12a Colliers Walk, BS48 1RG"

The present invention provides 1 match:
PARTY PLACE 12A COLLIERS WALK NAILSEA BRISTOL, BS48 1RG
"GBG Addressy" provides 5 matches:

1. Pizza Direct 179 York Way London, N7 9LN
2. Pizza Direct 21 Harris Road Calne, SN11 9PT
3. Pizza Direct 102 Old Road Clacton-on-Sea, CO15 3AA
4. Party Place 12A Colliers Walk Bristol, BS48 1RG
5. First Pizza Direct Unit 2 Keppoch Road Inverness, IV2 7LL

Here the present invention and "GBG Addressy" have taken different approaches. The present invention has prioritised the number and postcode, leading to the correct building being identified but a different business name. "GBG Addressy" has prioritised the business name, leading it to find 3 "pizza direct" restaurants, one "first pizza direct" restaurant, before finding the same match as the present invention on number 4.

Exemplary determination of the rarity score

A hypothetical example explains how the rarity score (RS) of a term is determined. Four exemplary addresses ($EX_A$, $EX_B$, $EX_C$ and $EX_D$) share the same postcode and thus form a corpus consisting of four documents:

$EX_A$: Honeydew Cottage Hill Lane Bath Somerset;
$EX_B$: Oaktree Cottage Hill Lane Bath Somerset;
$EX_C$: 3 Hill Lane Bath Somerset; and
$EX_D$: 4 Hill Lane Bath Somerset.

Each term in the corpus is listed in Table 1. For each term (i.e. each token), the term frequency (TF) for each document (i.e. each address) and the inverse document frequency (IDF) are determined. Multiplying each TF value with the corresponding IDF value results in a TF-IDF value for each term in each document. The maximum TF-IDF value for each term is its rarity score (RS). For example, the term "Hill" appears in every document and thus receives a rarity score of 0, while the terms "Honeydew" and "Oaktree" are the rarest terms within the corpus and thus receive the highest rarity score within the corpus.

Table 1: Exemplary determination of the rarity score (RS).

| Term | TF | | | | IDF | TF-IDF | | | | RS |
|---|---|---|---|---|---|---|---|---|---|---|
| | $EX_A$ | $EX_B$ | $EX_C$ | $EX_D$ | | $EX_A$ | $EX_B$ | $EX_C$ | $EX_D$ | |
| Honeydew | 1 | 0 | 0 | 0 | Log(4/1) = 0.6 | 0.6 | 0 | 0 | 0 | 0.6 |
| Oaktree | 0 | 1 | 0 | 0 | Log(4/1) = 0.6 | 0 | 0.6 | 0 | 0 | 0.6 |
| Cottage | 1 | 1 | 0 | 0 | Log(4/2) = 0.3 | 0.3 | 0.3 | 0 | 0 | 0.3 |
| Hill | 1 | 1 | 1 | 1 | Log(4/4) = 0 | 0 | 0 | 0 | 0 | 0 |
| Lane | 1 | 1 | 1 | 1 | Log(4/4) = 0 | 0 | 0 | 0 | 0 | 0 |
| Bath | 1 | 1 | 1 | 1 | Log(4/4) = 0 | 0 | 0 | 0 | 0 | 0 |
| Somerset | 1 | 1 | 1 | 1 | Log(4/4) = 0 | 0 | 0 | 0 | 0 | 0 |

**Claims**

1. A computer-implemented method for use in mail and parcel delivery, wherein the method matches raw address data ($A_{raw}$) to an identifier (I) using a computer device coupled to at least one database (DB), the method comprising:

   A) a pre-processing step (100) for address data (A) from the at least one database (DB), wherein the pre-processing step (100) includes:

   i) a sub-step (110) of receiving at least one input dataset (ID) from the at least one database (DB) comprising address data entries (A: $A_1$, $A_2$, ..., $A_B$) with corresponding identifiers (I: $I_1$, $I_2$, ..., $I_B$);
   ii) a sub-step (120) of tokenizing (T: [$T_{A1,1}$, $T_{A1,2}$, ..., $T_{A1,C}$]; [$T_{A2,1}$, $T_{A2,2}$, ..., $T_{A2,D}$]; [...]; [$T_{AB,1}$, $T_{AB,2}$, ..., $T_{AB,E}$]) the address data from the at least one input dataset (ID);
   iii) a sub-step (130) of determining and assigning a rarity score (RS: [$RS_{A1,1}$, $RS_{A2,2}$, ..., $RS_{A1,C}$]; [$RS_{A2,1}$, $RS_{A2,2}$, ..., $RS_{A2,D}$]; ; [...]; [$RS_{AB,1}$, $RS_{AB,2}$, ..., $RS_{AB,E}$]) to every token (T), wherein the rarity score (RS) is determined using a TF-IDF algorithm; and
   iv) a sub-step (140) of producing a first output dataset ($OD_1$) comprising rarity-scored tokens (T) for each address data entry (A) in the at least one input dataset (ID);

   B) a pre-processing step (200) for raw address data ($A_{raw}$), wherein the pre-processing step (200) includes:

   i) a sub-step (210) of receiving at least one raw address data entry ($A_{raw}$: $A_{raw1}$, $A_{raw2}$, ..., $A_{rawF}$) through a user query (Q);
   ii) a sub-step (220) of tokenizing ($T_{raw}$: [$T_{raw1,1}$, $T_{raw1,2}$, ..., $T_{rawF,G}$]; [$T_{raw2,1}$, $T_{raw2,2}$, ... , $T_{raw2,H}$]; [...]; [$T_{rawF,1}$, $T_{rawF,2}$, ..., $T_{rawF,I}$]) the raw address data ($A_{raw}$); and
   iii) a sub-step (230) of producing a second output dataset ($OD_2$) comprising tokenized raw address data ($A_{raw}$) for each entry in the user query (Q);

   C) a step (300) of performing a similarity assessment (SA) of the rarity-scored tokenized address data entries (A) from the first output dataset ($OD_1$) with each tokenized raw address data entry ($A_{raw}$) from the second output dataset ($OD_2$) with at least two selection methods (SM) that are ranked in order of priority; and
   D) a step (400) of producing a third output dataset ($OD_3$) comprising at least one identifier (I) from the corresponding address data entry (A) from the first output dataset ($OD_1$) for each raw address data entry ($A_{raw}$) from the second output dataset ($OD_2$) determined in the similarity assessment (SA).

2. The method of claim 1, wherein the address data entries (A) in sub-step (110) and the raw address data entries ($A_{raw}$) in sub-step (210) are received as a string (S; $S_{raw}$) or a set of strings.

3. The method of claim 1 or 2, wherein the identifier (I) is a unique numerical or unique alphanumerical identifier.

4. The method of any one of the preceding claims, wherein each token (T; $T_{raw}$) in sub-steps (120) and (220) is a word token or a number token.

5. The method of any one of the preceding claims, wherein in sub-step (130), a token (T) represents a term, an address data entry (A) represents a document and all address data entries (A) that have the same postcode represent a corpus in the TF-IDF algorithm; and the TF-IDF algorithm for determining the rarity score (RS) of each term within a corpus comprises the following steps:

A) determining the term frequency for every term in each document, wherein the term frequency is equal to 0 if the term does not exist in the document, and the term frequency is equal to 1 if the term does exist in the document;

B) determining the inverse document frequency by calculating the decadic logarithm of the fraction between the number of the documents in the corpus and the number of documents in the corpus that contain the term;

C) multiplying the term frequency with the inverse document frequency to generate the TF-IDF value for each term in each document; and

D) determining and selecting the maximum TF-IDF value for each term from all documents to generate the rarity score (RS) for each term.

6. The method of any one of the preceding claims, wherein the pre-processing step (100) of the address data ($A_1$, $A_2$, ..., $A_B$) from the at least one database (DB) is executed only once and the resulting first output dataset ($OD_1$) is stored and used for the similarity assessment (SA) each time a new user query (Q) is executed.

7. The method of any one of the preceding claims, wherein the similarity assessment (SA) in step (300) includes:

A) a sub-step (310) of receiving the first output dataset ($OD_1$) and the second output dataset ($OD_2$);

B) a sub-step (320) of identifying and selecting rarity-scored tokenized address data entries (A) from the first output dataset ($OD_1$) that have a common characteristic with the tokenized raw address data ($A_{raw}$) from the second output dataset ($OD_2$);

C) a sub-step of identifying and selecting at least one data entry (A) obtained in the previous step in at least two selection methods (SM) ranked in order of priority, each selection method (SM) comprising:

i) a sub-step (330) of defining a unique (set of) condition(s) (C) for the respective selection method (SM);

ii) a sub-step (340) of identifying and returning at least one data entry (A) that contains (a) token(s) fulfilling the condition(s) (C) of the respective selection method (SM);

D) a sub-step (350) of identifying the selection method(s) (SM) that return the least number of data entries (A);

E) if more than one selection methods (SM) return the smallest number of data entries (A), a sub-step (370) of identifying the one selection method (SM) identified in the previous step with the highest priority assigned; and

F) a sub-step (380) of returning the data entry/entries (A) obtained in either step (350) or (370) and its/their corresponding identifier (I).

8. The method of claim 7, wherein the common characteristic is the postcode.

9. The method of claim 7 or 8, wherein for defining the (set of) condition(s) (C) for each selection method (SM) in sub-step (330), the rarity-scored tokenized data entries (A) from the first output dataset ($OD_1$) and the tokenized raw address data ($A_{raw}$) from the second output dataset ($OD_2$) have (an) identical token(s) (T; $T_{raw}$) fulfilling one of the following conditions (C) or any combination thereof:

A) a number token;

B) the word token with the highest rarity score;

C) the word token with the second highest rarity score;

D) the number token with the highest rarity score;

E) the number token with the second highest rarity score;

F) the first token in the address;

G) the second token in the address;

H) a word token consisting of a single letter; and/or

I) the last number and the first word after.

10. The method of any one of claims 7 to 9, wherein the conditions (C) and/or the ranking of the at least two selection methods (SM) in sub-step (330) are predefined.

11. The method of any one of claims 7 to 9, wherein the conditions (C) and/or the ranking of the at least two selection methods (SM) in sub-step (330) are defined by user input.

**12.** A data processing system comprising means for carrying out the method of any one of claims 1 to 11.

**13.** A computer program comprising instructions which, when the program is executed by a computer, cause the computer to carry out the method of any one of claims 1 to 11.

**14.** A computer-readable medium comprising instructions which, when executed by a computer, cause the computer to carry out the method of any one of claims 1 to 11.

FIGURE 1

100

START STEP A

110

RECEIVE AT LEAST ONE INPUT
DATASET (ID) FROM AT LEAST
ONE DATABASE (DB):
ADDRESS DATA ENTRIES (A)
WITH IDENTIFIERS (I)

120

TOKENIZE ADDRESS DATA
ENTRIES (A) TO GENERATE
TOKENS (T)

130

DETERMINE AND ASSIGN A
RARITY SCORE (RS) TO EVERY
TOKEN (T) USING A TF-IDF
ALGORITHM

140

PRODUCE A FIRST OUTPUT
DATASET (OD₁) COMPRISING
RARITY-SCORED TOKENS (T)
FOR EACH ADDRESS DATA
ENTRY (A)

STOP STEP A

FIGURE 2

200

START STEP B

210
RECEIVE AT LEAST ONE RAW ADDRESS DATA ENTRY ($A_{raw}$) THROUGH A USER QUERY (Q)

220
TOKENIZE RAW ADDRESS DATA ENTRIES ($A_{raw}$) TO GENERATE TOKENS ($T_{raw}$)

230
PRODUCE A SECOND OUTPUT DATASET ($OD_2$) COMPRISING TOKENIZED RAW ADDRESS DATA FOR EACH ENTRY ($A_{raw}$) IN THE USER QUERY (Q)

STOP STEP B

FIGURE 3

300

START STEP C (FOR EACH ENTRY ($A_{raw}$) IN $OD_2$)

310

RECEIVE FIRST AND SECOND OUTPUT DATASETS ($OD_1$ AND $OD_2$)

330

DEFINE A UNIQUE (SET OF) CONDITION(S) (C) FOR EACH OF A NUMBER OF SELECTION METHODS (SM) AND RANK THEM (SM) IN ORDER OF PRIORITY

320

IDENTIFY AND SELECT ENTRIES (A) IN $OD_1$ THAT SHARE A COMMON CHARACTERISTIC (E.G. THE POSTCODE) WITH THE ENTRY ($A_{raw}$) IN $OD_2$

340

FOR EACH SELECTION METHOD (SM) SEPARATELY, IDENTIFY AND RETURN AT LEAST ONE ENTRY (A) FULFILLING THE CONDITION(S) (C)

350

IDENTIFY SELECTION METHOD(S) (SM) THAT RETURN THE LEAST NUMBER OF DATA ENTRIES (A)

370

IDENTIFY SELECTION METHOD (SM) WITH THE HIGHEST PRIORITY ASSIGNED

YES

MORE THAN ONE SELECTION METHOD (SM) IDENTIFIED?

NO

380

RETURN DATA ENTRIES (A) AND THEIR CORRSPONDING IDENTIFIER (I)

STOP STEP C

FIGURE 4

STEP A (100): PRE-PROCESS ADDRESS DATA (A) FROM AT LEAST ONE DATABASE (DB)

INPUT DATASET (ID)

FIRST OUTPUT DATASET ($OD_1$)

ADDRESS DATA (A) | IDENTIFIER (I) | ADDRESS STRING (S)

TOKENIZATION (120)

TOKENS (T)

SCORING (130)

RARITY SCORES (RS)

$A_1$ : $I_1$ $S_1$
$A_2$ : $I_2$ $S_2$
... ... ... ...
$A_B$ : $I_B$ $S_B$

$T_{A1,1}, T_{A1,2}, ..., T_{A1,C}$
$T_{A2,1}, T_{A2,2}, ..., T_{A2,D}$
...
$T_{AB,1}, T_{AB,2}, ..., T_{AB,E}$

$RS_{A1,1}, RS_{A1,2}, ..., RS_{A1,C}$
$RS_{A2,1}, RS_{A2,2}, ..., RS_{A2,D}$
...
$RS_{AB,1}, RS_{AB,2}, ..., RS_{AB,E}$

STEP B (200): PRE-PROCESS RAW ADDRESS DATA ($A_{raw}$)

USER QUERY (Q)

SECOND OUTPUT DATASET ($OD_2$)

RAW ADDRESS DATA ($A_{raw}$) | ADDRESS STRING ($S_{raw}$)

TOKENIZATION (220)

TOKENS ($T_{raw}$)

$A_{raw1}$ : $S_{raw1}$
$A_{raw2}$ : $S_{raw2}$
... ... ...
$A_{rawF}$ : $S_{rawF}$

$T_{raw1,1}, T_{raw1,2}, ..., T_{raw1,G}$
$T_{raw2,1}, T_{raw2,2}, ..., T_{raw2,H}$
...
$T_{rawF,1}, T_{rawF,2}, ..., T_{rawF,I}$

STEP C (300): PERFORM A SIMILARITY ASSESSMENT (SA)

| | $A_{raw1}$ | $A_{raw2}$ | ... | $A_{rawF}$ |
|---|---|---|---|---|
| CHARACTERISTIC | $A_1, A_3, A_4, A_{10}, A_{20}, A_{342}$ | $A_4, A_5, A_{46}, A_{100}, A_{110}, A_{324}$ | ... | $A_1, A_3, A_{20}, A_{342}$ |
| SM 1 | $A_1, A_4$ | $A_4, A_{100}, A_{110}, A_{324}$ | ... | — |
| SM 2 | $A_4, A_{20}$ | $A_{100}$ | ... | $A_1, A_3, A_{20}$ |
| SM 3 | $A_3, A_4, A_{10}, A_{20}$ | $A_{46}, A_{100}$ | ... | $A_3, A_{20}, A_{342}$ |

STEP D (400): GENERATE THIRD OUTPUT DATASET ($OD_3$)

$A_{raw1}$ : $A_1, A_4$
$A_{raw2}$ : $A_{100}$
... ... ...
$A_{rawF}$ : $A_1, A_3, A_{20}$

THIRD OUTPUT DATASET ($OD_3$)

FIGURE 5

<table>
<tr><td colspan="2">Europäisches Patentamt<br>European Patent Office<br>Office européen des brevets</td><td>**EUROPEAN SEARCH REPORT**</td><td>Application Number<br><br>**EP 23 15 5851**</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/057207 A1 (ORBKE WAYNE HENRY [US] ET AL) 5 March 2009 (2009-03-05)<br>* abstract; figures 1-4 *<br>* paragraph [0008] *<br>* paragraph [0041] * | 1-14 | INV.<br>G06F16/29<br>G06F16/215 |
| X<br><br>A | US 2009/216642 A1 (HO MICHAEL [CA] ET AL) 27 August 2009 (2009-08-27)<br>* abstract; figure 3 *<br>* paragraph [0061] – paragraph [0063] * | 1,12-14<br><br>2-11 | |
| A | US 2004/030572 A1 (CAMPBELL HELEN [US] ET AL) 12 February 2004 (2004-02-12)<br>* abstract; figure 1 *<br>* paragraph [0046] – paragraph [0047] * | 1-14 | |
| A | WO 2022/200797 A2 (DOORDA LTD [GB]) 29 September 2022 (2022-09-29)<br>* figures 2-3 *<br>* page 24, line 7 – page 26, line 17 * | 1-14 | TECHNICAL FIELDS SEARCHED (IPC)<br><br>G06F |

The present search report has been drawn up for all claims

| Place of search | Date of completion of the search | Examiner |
|---|---|---|
| Berlin | 25 May 2023 | Nazzaro, Antonio |

## ANNEX TO THE EUROPEAN SEARCH REPORT
## ON EUROPEAN PATENT APPLICATION NO.

EP 23 15 5851

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2023

| Patent document cited in search report | | | Publication date | Patent family member(s) | | | Publication date |
|---|---|---|---|---|---|---|---|
| US 2009057207 | A1 | | 05-03-2009 | NONE | | | |
| US 2009216642 | A1 | | 27-08-2009 | CA | 2716072 | A1 | 03-09-2009 |
| | | | | EP | 2260447 | A1 | 15-12-2010 |
| | | | | US | 2009216642 | A1 | 27-08-2009 |
| | | | | US | 2015234839 | A1 | 20-08-2015 |
| | | | | WO | 2009105862 | A1 | 03-09-2009 |
| US 2004030572 | A1 | | 12-02-2004 | NONE | | | |
| WO 2022200797 | A2 | | 29-09-2022 | GB | 2605180 | A | 28-09-2022 |
| | | | | WO | 2022200797 | A2 | 29-09-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012125950 A1

**Non-patent literature cited in the description**

- **BELL, G.B ; SETHI, A.** Matching records in a national medical patient index. Commun. *ACM,* 2001, vol. 44, 83-88
- **KOUMARELA, I. et al.** Experience: Enhancing Address Matching with Geocoding and Similarity Measure Selection. *ACM J. Data Inf. Qual.,* 2018, vol. 10 (2), 5-9

- **MANGALGI, S. et al.** Deep Contextual Embeddings for Address Classification in E-commerce. AI For Fashion Supply Chain. *arXiv:2007.03020v1,* 2020, 9-10
- *World Wide Web.,* 2020, vol. 23, 2005-2022